(19) **Europäisches Patentamt** / **European Patent Office** / **Office européen des brevets**

(11) **EP 2 146 188 B1**

(12) **FASCICULE DE BREVET EUROPEEN**

(45) Date de publication et mention de la délivrance du brevet:
**09.08.2017 Bulletin 2017/32**

(51) Int Cl.:
***G01D 18/00*** *(2006.01)*

(21) Numéro de dépôt: **09007658.9**

(22) Date de dépôt: **10.06.2009**

(54) **Procédé de détection de défaillance d'un capteur analogique et dispositif de détection pour mettre en oeuvre ledit procédé**

Verfahren zum Entdecken einer Störung an einem Analogsensor und Erkennungsvorrichtung zur Umsetzung dieses Verfahrens

Method for detecting a fault in an analogue sensor and detection device for implementing said method

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **19.07.2008 FR 0803420**

(43) Date de publication de la demande:
**20.01.2010 Bulletin 2010/03**

(73) Titulaire: **Airbus Helicopters**
**13725 Marignane Cedex (FR)**

(72) Inventeurs:
• **Lefebvre, Arnaud**
**1390 Aix en Provence (FR)**
• **Feuillebois, Christian**
**13410 Lambesc (FR)**

• **Simeu, Emmanuel**
**38330 Saint Ismer (FR)**
• **Bortolin Argenton, Eduardo**
**Porto Alegre**
**90050-320 (BR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
WO-A1-97/03385         WO-A1-02/088850
FR-A1- 2 884 605       US-A- 4 761 748
US-A1- 2004 152 187

**Description**

La présente invention concerne un procédé de détection de défaillance d'un capteur analogique ainsi qu'un dispositif de détection de défaillance d'un capteur analogique.

Dans de nombreux domaines techniques et notamment dans l'aéronautique, il est indispensable de pouvoir se fier aux valeurs mesurées par des capteurs analogiques et ce pour des raisons de sécurité d'une part et pour des raisons économiques d'autre part.

Il est déjà connu de surveiller différentes parties électroniques d'un appareil grâce à des tests prédéfinis, afin de permettre à un opérateur de maintenance de connaître l'état de fonctionnement (bon, dégradé ou défaillant) des différents équipements embarqués sur un aéronef du genre hélicoptère, par exemple.

La surveillance des capteurs analogiques afin de déterminer leur état de fonctionnement est généralement réalisée en surveillant des dépassements de seuils. On utilise ainsi la notion de seuil matériel et de seuil logiciel pour déterminer l'état d'un capteur.

Le seuil matériel correspond à la limite physique de ce que peut mesurer un capteur. La plage de mesure du capteur est donc limitée par des contraintes physiques qui représentent le seuil matériel du capteur.

Le seuil logiciel est une valeur calculée correspondant généralement aux limites physiques du phénomène mesuré en fonctionnement nominal. On détermine donc un seuil artificiel, dit logiciel, ne pouvant être dépassé en fonctionnement nominal du système comportant un capteur associé à un équipement.

On définit ainsi pour un capteur analogique différentes limites de fonctionnement. Les limites physiques basse et haute correspondent aux valeurs respectivement minimale et maximale pouvant être délivrées par le capteur. Les limites logicielles basse et haute correspondent aux valeurs respectivement minimale et maximale pouvant être atteintes par le phénomène physique mesuré, en fonctionnement nominal.

Une surveillance à l'aide de seuils, de l'état de fonctionnement, par exemple d'un hélicoptère, présente cependant un certain nombre d'inconvénients. Il est en effet impossible de détecter certains modes de défaillances. La non détection de certains modes de défaillance se produit par exemple lorsque l'effet de la défaillance ne se traduit pas par un dépassement de seuil du signal du capteur. A titre d'exemple, un capteur de tension fonctionnant entre 0 mV et 200 mV peut émettre un signal de détection correspondant à 0 mV. Cette valeur de tension se situe dans la plage de fonctionnement du capteur et aucune défaillance n'est donc détectée alors que cette valeur peut correspondre à un dysfonctionnement ou à un non fonctionnement dudit capteur.

La non détection de défaillances d'un capteur peut conduire à des dégradations d'équipements soumis à des contraintes anormales ou excessives ne pouvant être mesurées par le capteur.

La non détection de défaillances d'un capteur peut également affecter la sécurité de vol d'un aéronef du genre hélicoptère, dans la mesure où les informations issues du capteur défaillant ne sont pas considérées comme erronées.

On connaît également par l'intermédiaire du document WO97/03385 une méthode de détection de défaillance d'un capteur consistant à calculer un coefficient de corrélation pour un ensemble de mesures et à déterminer si ce coefficient de corrélation sort d'une plage de valeurs prédéfinie. Le procédé décrit se base donc sur une évaluation statistique pour déterminer une défaillance du capteur.

Le document FR2884605 décrit un procédé et un dispositif de surveillance des contraintes et d'impacts subis par un aéronef. Des capteurs piézo-électriques sont utilisés et idéalement disposés sur la structure de l'aéronef pour détecter des ondes acoustiques. Les signaux délivrés par ces capteurs sont ensuite exploités et mémorisés par des fonctions logicielles. Ces dernières comprennent également une fonction de surveillance des capteurs afin de maîtriser leur éventuelle défaillance.

Le document WO02/088850 décrit un système de contrôle du bon fonctionnement de capteurs dans des systèmes de production de gaz ou d'hydrocarbures en général. Le procédé de contrôle mis en oeuvre par un programme spécifique, consiste à générer une valeur de référence et comparer la valeur mesurée par le capteur à cette valeur de référence. Cette dernière est générée grâce à une valeur issue d'un autre capteur fonctionnant correctement, grâce à une valeur issue d'une modélisation théorique ou grâce à une distribution probabiliste des valeurs provenant d'un tel capteur.

Par ailleurs, le document US 4 761 748 décrit quant à lui une méthode pour valider des mesures effectuées sur un paramètre physique par exemple par l'intermédiaire d'un capteur. La méthode décrite consiste à générer des fonctions de référence pour lesquelles des valeurs de pentes seront calculées. Un coefficient de dispersion est ensuite calculé pour ces valeurs de pentes avant d'être comparé à des seuils prédéfinis.

Enfin, le document US 2004/152187 décrit une méthode et un dispositif pour mesurer le taux de glucose dans le sang à l'aide de capteurs. Une évaluation statistique est prévue pour écarter après une analyse, des mesures trop faibles ou trop élevées.

L'objet de la présente invention vise à proposer un procédé de détection de défaillance d'un capteur analogique permettant de s'affranchir des limitations mentionnées ci-dessus.

Un autre objet de la présente invention vise à proposer un procédé de détection de défaillance d'un capteur analogique qui peut être mis en oeuvre de façon facile et économique.

L'objet de la présente invention vise également à fournir un dispositif de détection de défaillance d'un capteur analogique, simple, économique et susceptible d'être embarqué dans un aéronef.

La présente invention permet de s'affranchir de l'utilisation d'un capteur de référence ou d'un signal de référence. L'objet de l'invention présente donc un caractère autonome et indépendant de références additionnelles

Les objets assignés à la présente invention sont atteints à l'aide d'un procédé de détection de défaillance d'un capteur analogique consistant à acquérir pour un phénomène physique des données mesurées par le capteur, à analyser ces données sous forme de valeurs mesurées et à générer une information sur l'état de fonctionnement dudit capteur, caractérisé en ce qu'il consiste à :

- détecter une discontinuité dans les mesures effectuées par le capteur,

- détecter un dépassement d'au moins un seuil de fonctionnement prédéfini dans les valeurs mesurées,

- calculer des pentes dans l'évolution des valeurs mesurées et détecter parmi ces pentes calculées un dépassement d'un seuil de pente prédéfini,

- effectuer des évaluations statistiques sur les mesures du capteur pour détecter une anomalie de fonctionnement à partir de ces évaluations statistiques,

- et vérifier si une des situations définies dans au moins une des étapes précédentes est avérée et générer dans l'affirmative un signal représentatif d'une défaillance du capteur.

Un avantage du procédé de détection conforme à l'invention réside dans le fait qu'il permet de contrôler le fonctionnement du capteur dans son ensemble. Toutes les connexions du capteur y compris son alimentation électrique sont contrôlées afin de valider le fonctionnement du capteur.

Le procédé de détection conforme à l'invention est de préférence mis en oeuvre en continu.

Le procédé de détection conforme à l'invention consiste par exemple à générer un signal représentatif d'un bon état de fonctionnement du capteur en cas d'absence de défaillance.

Le procédé de détection conforme à l'invention consiste par exemple à émettre un signal visuel et/ou sonore pour matérialiser l'information relative à l'état de fonctionnement du capteur.

Selon un autre exemple de mise en oeuvre, le procédé de détection conforme à l'invention consiste à enregistrer les informations relatives à une défaillance détectée, de manière à pouvoir restituer lesdites informations à un opérateur de maintenance.

Selon un autre exemple de mise en oeuvre du procédé conforme à l'invention, l'étape d'évaluations statistiques consiste à déterminer à partir d'un nombre N de mesures successives effectuées par le capteur, un écart type, un facteur de forme et un rapport signal/bruit et à déceler un dépassement d'au moins un seuil prédéterminé avec l'une au moins des évaluations déterminant l'écart type, le facteur de forme ou le rapport signal/bruit.

Pour déterminer l'écart type on utilise par exemple un premier évaluateur, à savoir :

$$Sdt(x) = C_N \cdot \sum_{i=1}^{N} \left| x_i - x_{i-1} \right|$$

en lieu et place de l'écart type théorique $\sigma = \sqrt{\dfrac{1}{N} \sum_{i=1}^{N} (x_i - \mu)^2}$ , avec $x_i$ et $x_{i-1}$ étant les résultats de mesure du capteur à l'instant $i$ et à l'instant précédent $i-1$, $N$ étant un entier supérieur ou égal à deux, et correspondant au nombre de mesures effectuées par le capteur et correspondant au nombre de cases mémoire d'un registre de décalage, $i$ étant un entier supérieur ou égal à 1, $C_N$ étant un coefficient dépendant du nombre de cases mémoire.

Pour déterminer le facteur de forme on utilise par exemple un second évaluateur, à savoir :

$$\eta_a = D_N \cdot \frac{(Me - \mu)}{Sdt(x)}$$

avec N étant un entier supérieur ou égal à 8, $D_N$ étant un facteur de normalisation issu d'une formule théorique du facteur de forme appelé « Skewness » à savoir :

$$\eta_N = D_N \cdot \frac{\mu_3}{\sigma^3} \quad \text{et} \quad \mu_k = \frac{1}{N}\sum_{i=1}^{N}(x_i - \mu)^k$$

où $\sigma = \sqrt{\frac{1}{N}\sum_{i=1}^{N}(x_i - \mu)^2}$ et $\mu = \frac{1}{N}\sum_{i=1}^{N}x_i$ correspondent respectivement à la formule théorique de l'écart type et de la moyenne des mesures, $M_e$ étant la valeur médiane des mesures, $\mu$ étant la moyenne desdites mesures et $Sdt(x)$ étant l'écart type calculé avec le premier évaluateur.

Selon un autre exemple de mise en oeuvre conforme à l'invention, pour déterminer le facteur de forme, on utilise un troisième évaluateur à savoir :

$$\eta_b = A.\alpha$$

avec $\alpha = E_N \left( \dfrac{Q_1 + Q_3 - 2Q_2}{Q_3 - Q_1} \right)$ et $A{=}7{,}73$, $E_N$ étant un facteur de normalisation déterminé expérimentalement, $Q_i$ étant la valeur mesurée enregistrée dans la case $(i.N)/4$ d'un registre de décalage dans lequel les valeurs mesurées sont classées de la plus faible $Q_1$ à la plus forte $Q_N$.

Selon un autre exemple de mise en oeuvre, pour déterminer le facteur de forme, on utilise un quatrième évaluateur à savoir :

$$\eta_c = A^*.\beta$$

avec $A^*{=}15.1$ et $\beta = F_N.((n/N){-}0{,}5)$ où $N$ est le nombre total de mesures, supérieur ou égal à 2, $n$ étant le nombre de mesures dont la valeur est inférieure à la moyenne $\mu$ et $F_N$ étant un facteur de normalisation déterminé expérimentalement.

Selon un exemple de mise en oeuvre du procédé conforme à l'invention, on détermine le rapport signal/bruit en utilisant un cinquième évaluateur, à savoir :

$$\xi = \frac{E_N \sum_{i=1}^{N} x_i}{range(x_i)}$$

où $x_i$ est la valeur mesurée à l'instant $i$, $range(x_i)$ étant l'écart entre la valeur mesurée la plus basse et la valeur mesurée la plus haute et $E_N$ étant un facteur de normalisation déterminé expérimentalement.

Les objets assignés à la présente invention sont également atteints, à l'aide d'un dispositif de détection de défaillance d'un capteur analogique, pour mettre en oeuvre le procédé de détection présenté ci-dessus et comportant :

- un moyen indicateur de l'état de fonctionnement d'un capteur analogique comportant un connecteur d'entrée de capteur, ledit moyen indicateur comportant un connecteur d'entrée relié par l'intermédiaire de conducteurs à un connecteur de sortie,

- et un circuit de contrôle du fonctionnement du capteur relié aux dits conducteurs de manière à raccorder en série ledit dispositif entre le connecteur d'entrée de capteur et un connecteur de sortie de faisceau du capteur respectivement grâce au connecteur de sortie et au connecteur d'entrée du moyen indicateur, ledit faisceau reliant grâce au dispositif de détection ledit capteur à un moyen de traitement des signaux délivrés par le capteur, ledit circuit de contrôle comportant des moyens d'évaluation de l'état de fonctionnement du capteur par l'intermédiaire de calculs statistiques ainsi qu'au moins un registre de décalage enregistrant les valeurs mesurées par le capteur et utilisées pour effectuer lesdits calculs statistiques, grâce à un moyen d'enregistrement.

Selon un exemple de réalisation conforme à l'invention, le dispositif de détection est relié au connecteur d'entrée de capteur et au connecteur de sortie de faisceau par l'intermédiaire de conducteurs blindés et étanches.

Le dispositif de détection conforme à l'invention est, par exemple, intégré dans un module amovible.

Le dispositif de détection conforme à l'invention est de préférence embarqué dans un aéronef du genre hélicoptère.

Le dispositif de détection conforme à l'invention est notamment adapté aux exigences en terme de qualification ou de certification d'équipements aéronautiques.

Les objets assignés à l'invention sont également atteints à l'aide d'un aéronef comportant une pluralité de capteurs analogiques, un dispositif d'affichage de l'état des différents capteurs, ledit état de chacun des capteurs étant élaboré par l'intermédiaire de dispositifs de détection précités et ledit dispositif d'affichage étant relié aux dispositifs de détection par des liaisons électriques ou autres moyens équivalents.

L'invention et ses avantages apparaîtront avec plus de détails dans le cadre de la description qui suit, donnée à titre d'exemple illustratif et non limitatif en référence aux figures annexées qui représentent :

- la figure 1, un diagramme fonctionnel d'un exemple de mise en oeuvre du procédé de détection de défaillance conforme à l'invention,

- la figure 2, un diagramme fonctionnel partiel et plus détaillé pour certaines étapes, de l'exemple de mise en oeuvre de la figure 1,

- la figure 3, un autre diagramme fonctionnel partiel et plus détaillé pour certaines étapes, de l'exemple de mise en oeuvre du procédé de détection de défaillance conforme à l'invention, et

- la figure 4, une représentation schématique d'un dispositif de détection de défaillance conforme à l'invention, disposé dans son environnement technique.

Les éléments structurellement et/ou fonctionnellement identiques et présents dans plusieurs figures distinctes sont affectés d'une seule et même référence.

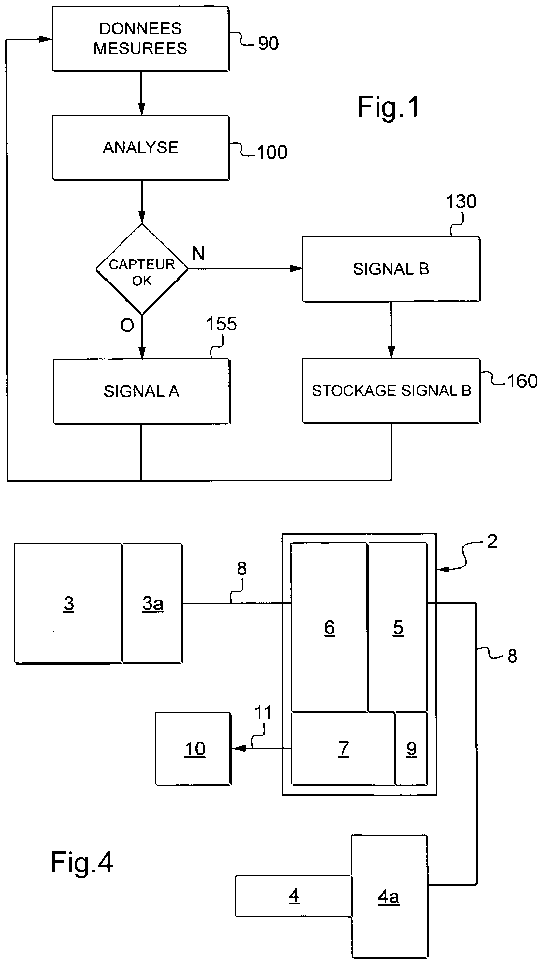

Le dispositif de détection 2 conforme à l'invention est illustré schématiquement à la figure 4. Le dispositif de détection 2 comporte un moyen indicateur de l'état de fonctionnement d'un capteur analogique 3. Le capteur analogique 3 comporte un connecteur d'entrée de capteur 3a lui permettant d'être relié à un faisceau 4 de capteur, connu en tant que tel. Ce dernier permet de relier le capteur 3 à un moyen de traitement, du genre appareil ou module électronique, des signaux délivrés par le capteur 3.

Le faisceau 4 de capteur comporte à cet effet un connecteur de sortie de faisceau 4a.

Le moyen indicateur comporte un connecteur d'entrée 5 et un connecteur de sortie 6 reliés entre eux par l'intermédiaire de conducteurs électriques.

Le dispositif de détection 2 comporte également un circuit 7 de contrôle du fonctionnement du capteur 3, relié aux conducteurs électriques de manière à raccorder en série le dispositif de détection entre le connecteur d'entrée de capteur 3a et le connecteur de sortie de faisceau 4a. Le circuit 7 est donc destiné à piloter le dispositif de détection et notamment le moyen indicateur. Le raccordement en série entre le connecteur d'entrée de capteur 3a et le connecteur de sortie de faisceau 4a est réalisé respectivement grâce au connecteur de sortie 6 et au connecteur d'entrée 5 du moyen indicateur.

Le dispositif de détection est par exemple relié au connecteur d'entrée de capteur 3a et au connecteur de sortie de faisceau 4a par l'intermédiaire de conducteurs blindés et étanches 8.

Le dispositif de détection est par exemple intégré dans un module amovible. Son alimentation électrique peut être une alimentation interne ou une alimentation obtenue en dérivant une partie du courant d'alimentation du capteur, sans altérer le bon fonctionnement dudit capteur.

Selon un exemple de réalisation et d'utilisation, le dispositif de détection est embarqué dans un aéronef du genre hélicoptère.

Avantageusement, le circuit 7 de contrôle du fonctionnement du capteur 3 comporte ou est associé à un moyen d'enregistrement 9 d'informations se rapportant à des défaillances du capteur 3, de manière à restituer lesdites informations. Un tel moyen d'enregistrement ou de stockage d'informations peut être constitué par une mémoire et/ou un microprocesseur. On peut également proposer la mise en place d'un moyen de temporisation avant l'enregistrement des données. Cette temporisation permet de filtrer les comportements transitoires pouvant apparaître sur les capteurs. Une temporisation par exemple de trois secondes semble être un bon compromis.

Le procédé de détection conforme à l'invention est illustré par exemple par la figure 1.

Selon l'étape 90 du procédé conforme à l'invention, on acquiert des données sous forme de valeurs mesurées par le capteur analogique 3. Ces valeurs sont ensuite analysées à l'étape 100 grâce au circuit 7 de contrôle du fonctionnement.

En cas de bon fonctionnement, l'étape 155 permet de générer un premier signal A représentatif d'un tel état de fonctionnement.

En cas de défaillance du capteur 3, l'étape 130 permet de générer un second signal B représentatif d'un dysfonctionnement. Dans une telle hypothèse, le procédé conforme à l'invention, dans son étape 160, consiste à enregistrer les informations relatives à une défaillance détectée, de manière à pouvoir les consulter ou les restituer. Ceci permet d'obtenir une traçabilité dans des événements qui ont pu conduire à une panne ou à un mauvais fonctionnement.

Le procédé conforme à l'invention peut consister à émettre un signal visuel et/ou sonore pour matérialiser l'information relative à l'état de fonctionnement du capteur 3 à l'étape 130 ou 155.

Le procédé de détection fonctionne de préférence en continu. Il peut également être activé périodiquement selon une fréquence prédéterminée.

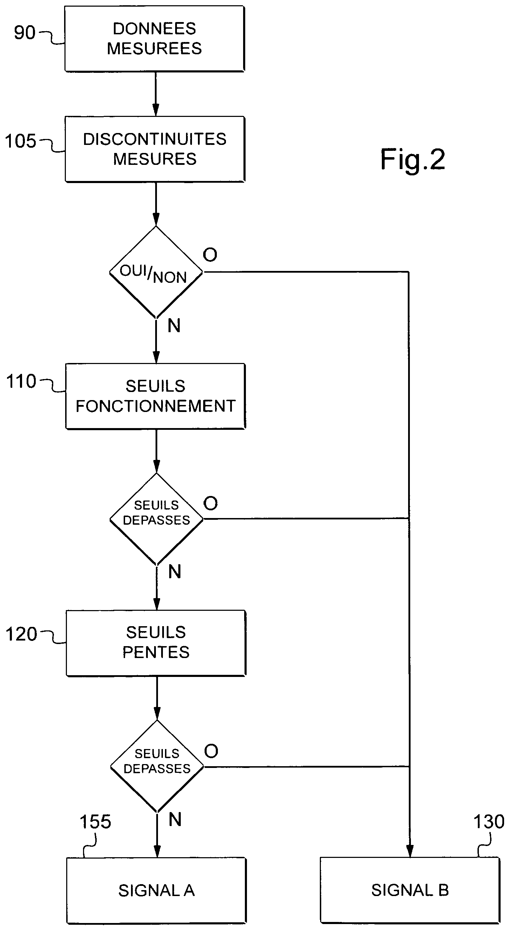

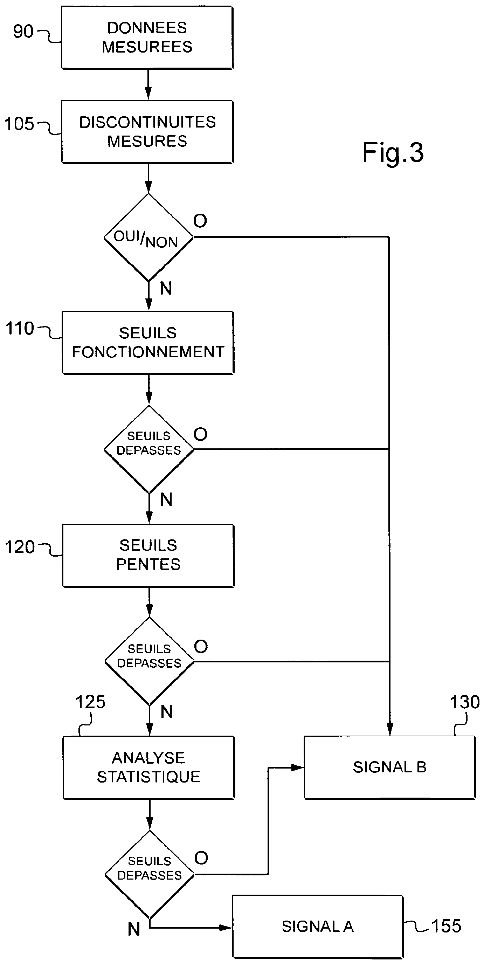

L'étape d'analyse 100 peut être subdivisée en un sous-ensemble d'étapes qui sont identifiées schématiquement aux figures 2 et 3.

Dans l'exemple de mise en oeuvre de la figure 2, l'étape d'analyse 100 se décompose en une succession d'étapes 105, 110 et 120.

L'étape 105 consiste à détecter des discontinuités dans les mesures effectuées par le capteur 3. Une discontinuité se produit lorsqu'un signal du capteur 3 est attendu et qu'aucune information n'est transmise par le capteur 3.

L'étape 110 consiste à détecter un dépassement d'au moins un seuil de fonctionnement prédéfini parmi les valeurs mesurées par le capteur 3. A titre d'exemple, il s'agit de détecter un dépassement d'une limite logicielle haute ou basse définie pour le capteur 3.

L'étape 120 consiste à calculer des pentes dans l'évolution des valeurs mesurées et à détecter parmi ces pentes calculées un dépassement d'un seuil de pente prédéfini. Il s'agit de détecter des défaillances qui n'entraînent pas une sortie des valeurs mesurées de la plage de validité délimitée par les seuils de fonctionnement de l'étape 110 précédente. Si une pente du signal dépasse une limite fixée, une défaillance est détectée. Au préalable du calcul de pente, il est possible d'appliquer des traitements aux valeurs mesurées. Il est ainsi possible d'utiliser un filtre afin de diminuer l'influence du bruit.

L'étape 130 consiste ensuite à vérifier si une situation définie dans l'une des étapes précédentes est avérée, et à générer dans l'affirmative le second signal B représentatif d'une défaillance du capteur 3. Dans le cas contraire, l'étape 155 consiste à délivrer un premier signal A, représentatif du bon fonctionnement du capteur 3.

L'exemple de mise en oeuvre illustré par la figure 3 comporte une étape supplémentaire 125, exécutée par exemple à l'issue de l'étape 120 et consistant à faire des évaluations statistiques sur les valeurs mesurées par le capteur. Les évaluations statistiques consistent à évaluer l'écart type des valeurs mesurées, le facteur de forme des valeurs mesurées ainsi que le rapport signal/bruit desdites valeurs mesurées.

On cherche ainsi à prendre en compte des données indépendantes des caractéristiques du capteur 3 et à faire une analyse de l'écart type se rapportant exclusivement aux valeurs mesurées. La fréquence d'échantillonnage du capteur 3, c'est-à-dire la fréquence avec laquelle sont effectuées les mesures, est donc très supérieure à la fréquence du phénomène mesuré, de manière à ne pas perdre d'informations sur ledit phénomène.

L'évaluation statistique consiste à déterminer l'écart type en utilisant un premier évaluateur, à savoir :

$$Sdt(x) = C_N . \sum_{i=1}^{N} |x_i - x_{i-1}|$$

avec $x_1$ et $x_{i-1}$ étant les résultats de mesure du capteur à l'instant $i$ et à l'instant précédent $i-1$, $N$ étant un entier supérieur ou égal à deux et correspondant au nombre de mesures effectuées par le capteur et correspondant au nombre de cases mémoire d'un registre de décalage et $C_N$ étant un coefficient dépendant du nombre de cases mémoire.

Un tel évaluateur est intéressant dans la mesure où l'écart type des mesures, évalué à l'aide du calcul théorique, utilise les formules suivantes :

$$\sigma = \sqrt{\frac{1}{N} \sum_{i=1}^{N} (xi - \mu)^2} \qquad \mu = \frac{1}{N} \sum_{i=1}^{N} xi$$

Une telle formule requiert une puissance de calcul supérieure à ce que le dispositif conforme à l'invention est capable de fournir dans sa version de base.

On a donc utilisé un registre à décalage, par exemple à N=16 cases mémoire, pour lequel on a déterminé le premier évaluateur.

$C_N$ est dépendant de la taille N du registre à décalage et à titre d'exemple il est donné dans le tableau ci-dessous:

| N | $C_N$ |
|---|---|
| 2 | 0,8866 |
| 4 | 0,4856 |
| 6 | 0,3939 |
| 8 | 0,3511 |
| 10 | 0,3249 |
| 12 | 0,3066 |
| 14 | 0,29328 |
| 16 | 0,28305 |
| 18 | 0,2744 |
| 20 | 0,2675 |
| 22 | 0,2616 |
| 24 | 0,2566 |
| 26 | 0,2520 |
| 28 | 0,2482 |
| 30 | 0,2446 |
| 32 | 0,2414 |

Ce premier évaluateur permet de placer un seuil sur la valeur de l'écart type afin de détecter un dépassement dudit écart type (écart type soit trop grand ou trop faible) et ainsi détecter les modes de défaillance du genre perte de précision, bruit excessif, court circuit, ou autre.

L'évaluation statistique consiste également à déterminer le facteur de forme des valeurs mesurées en utilisant un second évaluateur, à savoir :

$$\eta_a = D_N \cdot \frac{(Me - \mu)}{Sdt(x)}$$

avec $N$ étant un entier supérieur ou égal à 8, $D_N$ étant un facteur de normalisation issu de la formule théorique du facteur de forme appelé « Skewness » à savoir :

$$\eta_N = D_N \cdot \frac{\mu_3}{\sigma^3} \quad \text{et} \quad \mu_k = \frac{1}{N}\sum_{i=1}^{N}(x_i - \mu)^k$$

où $\sigma = \sqrt{\frac{1}{N}\sum_{i=1}^{N}(x_i - \mu)^2}$ et $\mu = \frac{1}{N}\sum_{i=1}^{N}x_i$ correspondent respectivement à la formule théorique de l'écart type et de la moyenne des mesures, $M_e$ étant la valeur médiane des mesures, $\mu$ étant la moyenne desdites mesures et $Sdt(x)$ étant l'écart type calculé avec le premier évaluateur.

Le facteur de forme « Skewness » permet de détecter plusieurs modes de pannes capteurs, notamment les dérives.

A titre d'exemple, les valeurs $D_N$ sont :

| N | 8 | 12 | 16 | 20 | 24 | 28 | 32 |
|---|---|---|---|---|---|---|---|
| $D_N$ | 2.40 | 1.88 | 11.65 | 1.53 | 1.45 | 1.39 | 1.35 |

Le facteur de forme est, dans le cadre de la mise en oeuvre du procédé conforme à l'invention, également calculé avec le troisième évaluateur. Pour déterminer le facteur de forme, on utilise donc le troisième évaluateur à savoir :

$$\eta_b = A\alpha$$

avec $\alpha = E_N \left( \dfrac{Q_1 + Q_3 - 2Q_2}{Q_3 - Q_1} \right)$ et $A = 7,73$, $E_n$ étant un facteur de normalisation déterminé expérimentalement, $Q_i$ étant la valeur mesurée enregistrée dans la case *(i.N)/4* d'un registre de décalage dans lequel les valeurs mesurées sont classées de la plus faible $Q_1$ à la plus forte $Q_N$.

A titre d'exemple, les valeurs $E_N$ sont :

| N | 4 | 5 | 6 | 7 | 8 | 9 | 10 | 11 | 12 |
|---|---|---|---|---|---|---|----|----|----|
| $E_N$ | 1.61 | 1.95 | 2.22 | 2.43 | 2.59 | 2.74 | 2.86 | 2.97 | 3.06 |

| N | 13 | 14 | 15 | 16 | 17 | 18 | 19 | 20 | 32 |
|---|----|----|----|----|----|----|----|----|----|
| $E_N$ | 3.15 | 3.23 | 3.29 | 3.37 | 3.43 | 3.48 | 3.53 | 3.59 | 4.02 |

Le facteur de forme est dans le cadre de la mise en oeuvre du procédé conforme à l'invention également calculé avec le quatrième évaluateur. Pour déterminer le facteur de forme, on utilise donc le quatrième évaluateur à savoir :

$$\eta_c = A^* . \beta$$

avec $A^* = 15.1$ et $\beta = F_N.((n/N) - 0,5)$ où $N$ est le nombre total de mesures, supérieur ou égal à 2, $n$ étant le nombre de mesures dont la valeur est inférieure à la moyenne $\mu$ et $F_N$ étant un facteur de normalisation déterminé expérimentalement.

A titre d'exemple, les valeurs de $F_N$ sont :

| N | 8 | 12 | 16 | 20 | 24 | 28 | 32 | 100 |
|---|---|----|----|----|----|----|----|-----|
| $F_N$ | 18.7 | 17.2 | 16.6 | 16.3 | 16.1 | 16.0 | 15.9 | 15.3 |

On calcule simplement le nombre d'échantillons dont la valeur mesurée est inférieure à la moyenne pour obtenir une bonne évaluation du facteur de forme.

Le quatrième évaluateur est particulièrement bien indiqué à cet effet.

Un facteur de forme normal, quand il n'y a pas de défaillance, est de 1. Le facteur de forme égal à 1 est représentatif d'une répartition gaussienne des mesures autour d'une moyenne. On obtient une telle répartition lorsque le capteur fonctionne correctement.

A l'aide des évaluateurs, appelés également estimateurs, on peut très simplement détecter un changement dans le facteur de forme, afin de détecter une défaillance. L'invention consiste donc à déterminer un seuil haut et un seuil bas pour le facteur de forme, au-delà desquels le facteur de forme n'est plus considéré comme gaussien et est représentatif d'un dysfonctionnement du capteur.

Les trois évaluateurs de forme précités présentent des constructions simplifiées, afin de faciliter les calculs et de permettre l'évaluation simple de la forme des valeurs mesurées et ce sans altérer les capacités de détection de dysfonctionnements du capteur.

Le calcul statistique selon le procédé de détection conforme à l'invention consiste également à déterminer un rapport signal/bruit.

Pour déterminer le rapport signal/bruit, on utilise un cinquième évaluateur, à savoir :

$$\xi = \frac{E_N \sum_{i=1}^{N} x_i}{range(x_i)}$$

où $x_i$ est la valeur mesurée à l'instant $i$, $range(x_i)$ étant l'écart entre la valeur mesurée la plus basse et la valeur mesurée la plus haute et $E_N$ étant un facteur de normalisation déterminé expérimentalement.

Ce cinquième évaluateur permet une très bonne estimation du rapport signal/bruit, afin de détecter un certain nombre d'anomalies sur un capteur. En outre, il présente l'avantage d'une construction plus simple que le rapport signal/bruit théorique donné par la formule :

$$SNRa = \frac{C_x \left( \sum_{i=1}^{x} xi \right)^2}{\sum_{i=1}^{x} (xi - \mu)^2}$$

Les capacités de calculs nécessaires pour le dispositif conforme à l'invention sont donc réduites avec l'utilisation du cinquième évaluateur déterminant le rapport signal/bruit.

Le calcul de l'écart type et du facteur de forme, en temps réel à l'aide de 2 registres à décalage, permet une évaluation statistique indépendante du capteur mesuré, tout en permettant une simplicité de calcul.

La simplicité des évaluateurs décrits ci-dessus permet donc de calculer simplement l'écart type, le facteur de forme et le rapport signal sur bruit. En outre, les opérations de calcul sur des informations statistiques, procurent une indépendance par rapport à la nature du signal. Cette méthode est donc utilisable pour n'importe quel capteur par opposition à une utilisation de seuils qui ne sont pas pertinents, suivant les modes de défaillance, pour localiser une défaillance.

Afin de ne pas générer de fausses alarmes, on peut définir une temporisation (par exemple 3 secondes) pendant laquelle, l'écart type calculé ou le facteur de forme calculé doit rester au-delà des limites de bon fonctionnement définies

Le procédé de détection conforme à l'invention présente l'avantage de détecter des modes de défaillance qui étaient indétectables.

En outre, la mise en oeuvre du procédé conforme à l'invention ne nécessite pas le remplacement des capteurs analogiques existants. Le coût de sa mise en oeuvre est donc particulièrement bas.

Le procédé conforme à l'invention permet également de réduire le temps nécessaire à la localisation d'une panne et réduit le nombre de fausses déposes. La réduction des ambiguïtés de localisation, en ajoutant ce dispositif conforme à l'invention, permet de différencier entre une panne issue d'un capteur analogique et une panne liée aux étages de remise en forme/transformation du signal d'autres équipements en aval du capteur.

Le procédé conforme à l'invention présente l'avantage qu'il est mis en oeuvre par un module autonome et non par un processeur interne des équipements. Il n'est ainsi plus nécessaire de détecter une corrélation croisée entre des valeurs mesurées avec des paramètres complémentaires se rapportant à un même phénomène physique pour mieux identifier et/ou localiser une panne.

Le dispositif de détection conforme à l'invention, permettant de mettre en oeuvre le procédé précité, présente l'avantage qu'il peut être embarqué ou débarqué.

Le dispositif de détection comporte avantageusement un moyen indicateur du genre voyant lumineux qui reste allumé en cas de dysfonctionnement du capteur correspondant. Cette information peut alors être exploitée dès le retour au sol dans le cas d'un aéronef.

La présente invention concerne également un aéronef comportant une pluralité de capteurs (3) analogiques, un dispositif d'affichage (10) de l'état des différents capteurs (3), ledit état de chacun des capteurs (3) étant élaboré par l'intermédiaire de dispositifs de détection (2) et ledit dispositif d'affichage (10) étant relié aux dispositifs de détection (2) par exemple grâce à des liaisons (11) électriques, des liaisons optiques ou des liaisons radios.

Naturellement, la présente invention est sujette à de nombreuses variations quant à sa mise en oeuvre. Bien que plusieurs modes de réalisations et de mise en oeuvre aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

**Revendications**

**1.** Procédé de détection de défaillance d'un capteur analogique consistant à acquérir pour un phénomène physique des données mesurées par le capteur, à analyser ces données sous forme de valeurs mesurées et à générer une information sur l'état de fonctionnement dudit capteur,
**caractérisé en ce qu**'il consiste à :

- (105) détecter une discontinuité dans les mesures effectuées par le capteur,
- (110) détecter un dépassement d'au moins un seuil de fonctionnement prédéfini parmi les valeurs mesurées,
- (120) calculer des pentes dans l'évolution des valeurs mesurées et détecter parmi ces pentes calculées un dépassement d'un seuil de pente prédéfini,
- (125) effectuer des évaluations statistiques sur les mesures du capteur pour détecter une anomalie de fonctionnement à partir desdites évaluations statistiques,
- et vérifier si une des situations définies dans au moins une des étapes précédentes est avérée et générer dans l'affirmative un signal représentatif d'une défaillance du capteur.

**2.** Procédé de détection selon la revendication 1,
**caractérisé en ce qu**'il est mis en oeuvre en continu.

**3.** Procédé de détection selon l'une quelconque des revendications précédentes,
**caractérisé en ce qu**'il consiste à (155) générer un signal représentatif d'un bon état de fonctionnement du capteur en cas d'absence de défaillance.

**4.** Procédé de détection selon l'une quelconque des revendications 1 à 3,
**caractérisé en ce qu**'il consiste à émettre un signal visuel et/ou sonore pour matérialiser l'information relative à l'état de fonctionnement du capteur.

**5.** Procédé de détection selon l'une quelconque des revendications précédentes,
**caractérisé en ce qu**'il consiste à (160) enregistrer les informations relatives à une défaillance détectée, de manière à pouvoir les consulter ou à les restituer.

**6.** Procédé de détection selon l'une quelconque des revendications 1 à 5,
**caractérisé en ce que** l'étape (125) d'évaluations statistiques consiste à déterminer à partir d'un nombre N de mesures successives effectuées par le capteur, un écart type, un facteur de forme et un rapport signal/bruit et à déceler un dépassement d'au moins un seuil prédéterminé avec l'une au moins des évaluations déterminant l'écart type, le facteur de forme ou le rapport signal/bruit.

**7.** Procédé de détection selon la revendication 6,
**caractérisé en ce que** pour déterminer l'écart type on utilise un premier évaluateur, à savoir :

$$Sdt(x) = C_N \cdot \sum_{i=1}^{N} |x_i - x_{i-1}|$$

avec $x_i$ et $x_{i-1}$ étant les résultats de mesure du capteur à l'instant $i$ et à l'instant précédent $i-1$, $N$ étant un entier supérieur ou égal à deux et correspondant au nombre de mesures effectuées par le capteur et correspondant au nombre de cases mémoire d'un registre de décalage et $C_N$ étant un coefficient dépendant du nombre de cases mémoire.

**8.** Procédé de détection selon la revendication 7,
**caractérisé en ce que** pour déterminer le facteur de forme on utilise un second évaluateur, à savoir :

$$\eta_a = D_N \cdot \frac{(Me - \mu)}{Sdt(x)}$$

avec N étant un entier supérieur ou égal à 8, $D_N$ étant un facteur de normalisation issu de la formule théorique du facteur de forme appelé « Skewness » à savoir :

$$\eta_N = D_N . \frac{\mu_3}{\sigma^3} \ \text{ et } \ \mu_k = \frac{1}{N}\sum_{i=1}^{N}(x_i - \mu)^k$$

avec $\sigma = \sqrt{\frac{1}{N}\sum_{i=1}^{N}(x_i - \mu)^2}$ et $\mu = \frac{1}{N}\sum_{i=1}^{N}x_i$ correspondant respectivement à la formule théorique de l'écart type et de la moyenne des mesures, $M_e$ étant la valeur médiane des mesures, $\mu$ étant la moyenne desdites mesures et $Sdt(x)$ étant l'écart type calculé avec le premier évaluateur.

**9.** Procédé de détection selon la revendication 6 ou 7,
**caractérisé en ce que** pour déterminer le facteur de forme on utilise un troisième évaluateur à savoir :

$$\eta_b = A.\alpha$$

avec $\alpha = E_N\left(\dfrac{Q_1 + Q_3 - 2Q_2}{Q_3 - Q_1}\right)$ et $A=7,73$, $E_N$ étant un facteur de normalisation déterminé expérimentalement, $Q_i$ étant la valeur mesurée enregistrée dans la case $(i.N)/4$ d'un registre de décalage dans lequel les valeurs mesurées sont classées de la plus faible $Q_1$ à la plus forte $Q_N$.

**10.** Procédé de détection selon la revendication 6 ou 7,
**caractérisé en ce que** pour déterminer le facteur de forme on utilise un quatrième évaluateur à savoir :

$$\eta_c = A^* . \beta$$

avec $A^*=15.1$ et $\beta=F_N .((n/N)-0,5)$ où $N$ est le nombre total de mesures, supérieur ou égal à 2, $n$ étant le nombre de mesures dont la valeur est inférieure à la moyenne $\mu$ et $F_N$ étant un facteur de normalisation déterminé expérimentalement.

**11.** Procédé de détection selon l'une quelconque des revendications 6 à 10,
**caractérisé en ce que** pour déterminer le rapport signal/bruit on utilise un cinquième évaluateur, à savoir :

$$\xi = \frac{E_N\sum_{i=1}^{N}x_i}{range(x_i)}$$

avec $x_i$ étant la valeur mesurée à l'instant $i$, $range(x_i)$ étant l'écart entre la valeur mesurée la plus basse et la valeur mesurée la plus haute et $E_N$ étant un facteur de normalisation déterminé expérimentalement.

**12.** Dispositif de détection (2) de défaillance d'un capteur analogique (3), pour mettre en oeuvre le procédé de détection conforme à l'une quelconque des revendications 1 à 11, **caractérisé en ce qu'**il comporte :

- un moyen indicateur de l'état de fonctionnement d'un capteur analogique comportant un connecteur d'entrée de capteur (3a), ledit moyen indicateur comportant un connecteur d'entrée (5) relié par l'intermédiaire de conducteurs à un connecteur de sortie (6),
- et un circuit de contrôle (7) du fonctionnement du capteur (3) relié aux dits conducteurs de manière à raccorder en série ledit dispositif (2) entre le connecteur d'entrée (3a) de capteur et un connecteur de sortie de faisceau (4a) du capteur respectivement grâce au connecteur de sortie (6) et au connecteur d'entrée (5) du moyen indicateur, ledit faisceau (4) reliant grâce au dispositif (2) ledit capteur (3) à un moyen de traitement des signaux délivrés par le capteur (3), ledit circuit de contrôle (7) comportant des moyens d'évaluation de l'état de fonctionnement du capteur par l'intermédiaire de calculs statistiques ainsi qu'au moins un registre de décalage enregistrant les valeurs mesurées par le capteur (3) et utilisées pour effectuer lesdits calculs statistiques, grâce à un moyen d'enregistrement (9).

**13.** Dispositif de détection (2) selon la revendication 12,
**caractérisé en ce qu'**il est relié au connecteur d'entrée (3a) de capteur et au connecteur de sortie (4a) de faisceau par l'intermédiaire de conducteurs blindés et étanches (8).

**14.** Dispositif de détection (2) selon la revendication 12 ou 13,
**caractérisé en ce qu'**il est intégré dans un module amovible.

**15.** Dispositif de détection (2) selon l'une quelconque des revendications 12 à 14,
**caractérisé en ce qu'**il est embarqué dans un aéronef du genre hélicoptère.

**16.** Dispositif de détection (2) selon l'une quelconque des revendications 12 à 15,
**caractérisé en ce qu'**il est adapté pour être certifié et/ou qualifié comme des équipements de l'aéronautique.

**17.** Aéronef comportant une pluralité de capteurs (3) analogiques,
**caractérisé en ce qu'**il comporte un dispositif d'affichage (10) de l'état des différents capteurs (3), ledit état de chacun des capteurs (3) étant élaboré par l'intermédiaire de dispositifs de détection (2) conformes à l'une quelconque des revendications 12 à 16 et ledit dispositif d'affichage (10) étant relié aux dispositifs de détection (2) par des liaisons (11) électriques ou autres moyens équivalents.


**Patentansprüche**

**1.** Verfahren zur Erfassung einer Störung eines Analogsensors, was darin besteht, für ein physikalisches Phänomen von dem Sensor gemessene Daten zu sammeln, diese Daten in Form von Messwerten zu analysieren, und eine Information über den Betriebszustand des Sensors zu erzeugen,
**dadurch gekennzeichnet, dass** es daraus besteht:

- (105) eine Unstetigkeit in den von dem Sensor vorgenommenen Messungen zu erfassen,
- (110) eine Überschreitung mindestens eines vordefinierten Schwellenwerts unter den Messwerten zu erfassen,
- (120) Steigungen bei der Entwicklung von Messwerten zu berechnen und eine Überschreitung eines vordefinierten Steigungsschwellenwertes unter den berechneten Steigungen zu erfassen,
- (125) statistische Auswertungen an den Messungen des Sensors auszuführen, um eine Betriebsanomalie ausgehend von den statistischen Auswertungen zu erfassen, und
- zu überprüfen, ob eine der in den vorhergehenden Schritten definierten Situationen eingetreten ist, und bejahendenfalls ein Signal zu erzeugen, das eine Störung des Sensors anzeigt.

**2.** Erfassungsverfahren nach Anspruch 1,
**dadurch gekennzeichnet, dass** es ohne Unterbrechung ausgeführt wird.

**3.** Erfassungsverfahren nach einem der vorstehenden Ansprüche,
**dadurch gekennzeichnet, dass** es daraus besteht, ein Signal zu erzeugen, das einen guten Betriebszustand des Sensors im Falle des Nichtvorliegens einer Störung anzeigt.

**4.** Erfassungsverfahren nach einem der Ansprüche 1 bis 3,
**dadurch gekennzeichnet, dass** es darin besteht, ein optisches und/oder akustisches Signal auszusenden, um Informationen bezüglich des Betriebszustands des Sensors darzustellen.

**5.** Erfassungsverfahren nach einem der vorstehenden Ansprüche,
**dadurch gekennzeichnet, dass** es daraus besteht, die Informationen bezüglich einer erfassten Störung derart aufzunehmen, dass diese abgerufen werden können oder um diese wiederzugeben.

**6.** Erfassungsverfahren nach einem der Ansprüche 1 bis 5,
**dadurch gekennzeichnet, dass** der Schritt (125) der statistischen Auswertung darin besteht, ausgehend von einer Anzahl N von von dem Sensor durchgeführten aufeinanderfolgenden Messungen, einen typischen Unterschied, einen Formfaktor und ein Signal/ Rausch-Verhältnis zu bestimmen und eine Überschreitung mindestens eines vorbestimmten Schwellenwertes mit mindestens einer der Auswertungen zur Bestimmung des typischen Unterschieds, des Formfaktors oder des Signal/Rausch-Verhältnisses nachzuweisen.

7. Erfassungsverfahren nach Anspruch 6,
**dadurch gekennzeichnet, dass** zur Bestimmung des typischen Unterschieds eine erste Abschätzung verwendet wird, nämlich:

$$Sdt(x) = C_N \cdot \sum_{i=1}^{N} |x_i - x_{i-1}| \ ,$$

wobei $x_i$ und $x_{i-1}$ Messergebnisse des Sensors zu einem Zeitpunkt $i$ und einem vorhergehenden Zeitpunkt $i-1$ sind, $N$ eine ganze Zahl größer oder gleich zwei ist, die der Anzahl der von dem Sensor durchgeführten Messungen entspricht und die der Anzahl der Speicherplätze eines Schieberegisters entspricht, und $C_N$ ein Koeffizient ist, der von der Anzahl der Speicherplätze abhängt.

8. Erfassungsverfahren nach Anspruch 7,
**dadurch gekennzeichnet, dass**, um den Formfaktor zu bestimmen, eine zweite Abschätzung verwendet wird, nämlich:

$$\eta_a = D_N \cdot \frac{(Me - \mu)}{Sdt(x)} \ ,$$

wobei $N$ eine ganze Zahl größer oder gleich 8 ist, $D_N$ ein Normierungsfaktor ist, der aus der theoretischen Formel des "Skewness" genannten Faktors hervorgeht, nämlich:

$$\eta_N = D_N \cdot \frac{\mu_3}{\sigma^3} \quad \text{und} \quad \mu_k = \frac{1}{N} \sum_{i=1}^{N} (x_i - \mu)^k \ ,$$

mit $\sigma = \sqrt{\dfrac{1}{N} \sum_{i=1}^{N} (x_i - \mu)^2}$ und $\mu = \dfrac{1}{N} \sum_{i=1}^{N} x_i$ jeweils der theoretischen Formel des typischen Unterschieds und dem Mittelwert der Messungen entsprechen, $M_e$ der Mittelwert der Messungen ist, $\mu$ das Mittel der Messungen ist, und $Sdt(x)$ der mit der ersten Abschätzung berechnete typische Unterschied ist.

9. Erfassungsverfahren nach Anspruch 6 oder 7,
**dadurch gekennzeichnet, dass**, um den Formfaktor zu bestimmen, eine dritte Abschätzung verwendet wird, nämlich:

$$\eta_b = A \cdot \alpha \ ,$$

wobei $\alpha = E_N \left( \dfrac{Q_1 + Q_3 - 2Q_2}{Q_3 - Q_1} \right)$ und A = 7,73 ist, wobei $E_N$ ein experimentell bestimmter Normfaktor ist,

$Qi$ der Messwert ist, der in dem Speicherplatz $(i.N)/4$ eines Schieberegisters gespeichert ist, in dem die Messwerte von dem schwächsten $Q_1$ bis zu dem stärksten $Q_N$ klassifiziert sind.

10. Erfassungsverfahren nach Anspruch 6 oder 7,
**dadurch gekennzeichnet, dass**, um den Formfaktor zu bestimmen, eine vierte Abschätzung verwendet wird,

nämlich:

$$\eta_c = A^* \cdot \beta \quad ,$$

mit $A^* = 15,1$ und $\beta = F_N \cdot ((n/N)-0,5)$, wobei $N$ die Gesamtzahl der Messungen ist, die größer oder gleich 2 ist, n die Anzahl der Messungen ist, deren Wert unter dem Mittelwert $\mu$ ist, und $F_N$ ein Normfaktor ist, der experimentell bestimmt wurde.

**11.** Erfassungsverfahren nach einem der Ansprüche 6 bis 10,
**dadurch gekennzeichnet, dass**, um das Signal/Rausch-Verhältnis zu bestimmen, eine fünfte Abschätzung verwendet wird, nämlich:

$$\xi = \frac{E_N \sum_{i=1}^{N} x_i}{Bereich(x_i)} \quad ,$$

wobei $x_i$ der Wert ist, der zu dem Zeitpunkt $i$ gemessen wurde, *Bereich ($x_i$)* der Unterschied zwischen dem kleinsten gemessenen Wert und dem größten gemessenen Wert ist, und $E_N$ ein Normfaktor ist, der experimentell bestimmt wurde.

**12.** Vorrichtung (2) zur Erfassung einer Störung eines Analogsensors (3) zur Durchführung des Erfassungsverfahrens nach einem der Ansprüche 1 bis 11,
**dadurch gekennzeichnet, dass** sie aufweist:

- ein Mittel, das den Betriebszustand eines Analogsensors anzeigt, mit einem Eingangsverbinder (3a) des Sensors, wobei das Anzeigemittel einen Eingangsverbinder (5) aufweist, der über Leitungen mit einem Ausgangsverbinder (6) verbunden ist, und
- eine Schaltung (7) zur Überwachung des Betriebs des Sensors (3), die mit den Leitungen derart verbunden ist, dass sie die Vorrichtung (2) zwischen dem Eingangsverbinder (3a) des Sensors und einem Ausgangsverbinder des Leitungsbündels (4a) des Sensors jeweils mit Hilfe des Ausgangsverbinders (6) und des Eingangsverbinders (5) des Anzeigemittels in Reihe verbindet, wobei das Leitungsbündel (4) mit Hilfe der Vorrichtung (2) den Sensor (3) mit einem Mittel zur Verarbeitung von Signalen verbindet, die von dem Sensor (3) geliefert werden, wobei die Überwachungsschaltung (7) Mittel zur Erfassung des Betriebszustands des Sensors durch statistische Berechnungen aufweist sowie mindestens ein Schieberegister, welches die von dem Sensor (3) gemessenen Werte, die verwendet werden, um die statistischen Berechnungen durchzuführen, mit Hilfe eines Aufzeichnungsmittels (9) aufzeichnet.

**13.** Erfassungsvorrichtung (2) nach Anspruch 12,
**dadurch gekennzeichnet, dass** die Vorrichtung mit dem Eingangsverbinder (3a) des Sensors und dem Ausgangsverbinder (4a) des Leitungsbündels über abgeschirmte und dichte Leiter (8) verbunden ist.

**14.** Erfassungsvorrichtung (2) nach Anspruch 12 oder 13,
**dadurch gekennzeichnet, dass** sie in ein abnehmbares Modul integriert ist.

**15.** Erfassungsvorrichtung (2) nach einem der Ansprüche 12 bis 14,
**dadurch gekennzeichnet, dass** sie in ein Luftfahrzeug vom Typ Hubschrauber eingebaut ist.

**16.** Erfassungsvorrichtung (2) nach einem der Ansprüche 12 bis 15,
**dadurch gekennzeichnet, dass** sie ausgebildet ist, um als luftfahrttechnische Ausrüstung zertifiziert und/oder qualifiziert zu sein.

**17.** Luftfahrzeug mit einer Mehrzahl von Analogsensoren (3),
**dadurch gekennzeichnet, dass** es eine Vorrichtung (10) zur Anzeige des Zustands verschiedener Sensoren (3) aufweist, wobei der Zustand eines jeden der Sensoren (3) mittels Erfassungsvorrichtungen (2) nach einem der Ansprüche 12 bis 16 ausgearbeitet wird, und wobei die Anzeigevorrichtung (10) mit den Erfassungsvorrichtungen (2) durch elektrische Verbindungen (11) oder andere äquivalente Mittel verbunden ist.

**Claims**

1. Method for detecting failure of an analogue sensor consisting in acquiring for a physical phenomenon data measured by the sensor, in analysing this data in the form of measured values and in generating information on the operating state of said sensor,
   **characterised in that** it consists in:

   - (105) detecting a discontinuity in the measurements performed by the sensor,
   - (110) detecting an exceedance of at least one predefined operating threshold among the measured values,
   - (120) calculating slopes in the evolution of the measured values and detecting among these calculated slopes an exceedance of a predefined slope threshold,
   - (125) performing statistical evaluations on the measurements of the sensor to detect an operating anomaly from said statistical evaluations,
   - and verifying if one of the situations defined in at least one of the preceding steps is proved and if so generating a signal representative of a failure of the sensor.

2. Detecting method according to claim 1,
   **characterised in that** it is implemented continuously.

3. Detecting method according to any one of the preceding claims,
   **characterised in that** it consists in (155) generating a signal representative of a good operating state of the sensor in the case of absence of failure.

4. Detecting method according to any one of claims 1 to 3,
   **characterised in that** it consists in emitting a visual and/or sound signal to materialise the information relating to the operating state of the sensor.

5. Detecting method according to any one of the preceding claims,
   **characterised in that** it consists in (160) recording the information relating to a detected failure, so as to be able to consult or restore the information.

6. Detecting method according to any one of claims 1 to 5,
   **characterised in that** the statistical evaluation step (125) consists in determining from a number N of successive measurements performed by the sensor, a standard deviation, a form factor and a signal-to-noise ratio and in detecting an exceedance of at least one predetermined threshold with at least one of the evaluations determining the standard deviation, the form factor or the signal-to-noise ratio.

7. Detecting method according to claim 6,
   **characterised in that** to determine the standard deviation a first evaluator is used, namely:

$$Sdt(x) = C_N \cdot \sum_{i=1}^{N} |x_i - x_{i-1}|$$

   with $x_i$ and $x_{i-1}$ being the results of measurement of the sensor at the instant $i$ and at the preceding instant $i$-$1$, $N$ being an integer greater than or equal to two and corresponding to the number of measurements performed by the sensor and corresponding to the number of memory cells of a shift register and $C_N$ being a coefficient dependent on the number of memory cells.

8. Detecting method according to claim 7,
   **characterised in that** to determine the form factor a second evaluator is used, namely:

$$\eta_a = D_N . \frac{(Me - \mu)}{Sdt(x)}$$

with N being an integer greater than or equal to 8, $D_N$ being a normalisation factor derived from the theoretical formula of the form factor called "skewness", namely:

$$\eta_N = D_N . \frac{\mu_3}{\sigma^3} \quad \text{and} \quad \mu_k = \frac{1}{N} \sum_{i=1}^{N} (x_i - \mu)^k$$

with $\sigma = \sqrt{\frac{1}{N} \sum_{i=1}^{N} (x_i - \mu)^2}$ and $\mu = \frac{1}{N} \sum_{i=1}^{N} x_i$ corresponding respectively to the theoretical formula of the standard deviation and the mean of the measurements, $M_e$ being the median value of the measurements, $\mu$ being the mean of said measurements and $Sdt(x)$ being the standard deviation calculated with the first evaluator.

9. Detecting method according to claim 6 or 7,
   **characterised in that** to determine the form factor a third evaluator is used, namely:

$$\eta_b = A.\alpha$$

with $\alpha = E_N \left( \frac{Q_1 + Q_3 - 2Q_2}{Q_3 - Q_1} \right)$ and A=7.73, $E_N$ being a normalisation factor determined experimentally, $Q_i$ being the measured value recorded in the cell *(i.N)/4* of a shift register in which the measured values are ranked from the lowest $Q_1$ to the highest $Q_N$.

10. Detecting method according to claim 6 or 7,
    **characterised in that** to determine the form factor a fourth evaluator is used, namely:

$$\eta_c = A * .\beta$$

with *A\*=15.1* and *β=F_N.((n/N)-0.5)* where *N* is the total number of measurements greater than or equal to 2, *n* being the number of measurements whose value is less than the mean $\mu$ and $F_N$ being a normalisation factor determined experimentally.

11. Detecting method according to any one of claims 6 to 10,
    **characterised in that** to determine the signal-to-noise ratio a fifth evaluator is used, namely:

$$\xi = \frac{E_N \sum_{i=1}^{N} x_i}{range(x_i)}$$

with $x_i$ being the measured value at the instant *i*, *range (x_i)* being the difference between the lowest measured value and the highest measured value and $E_N$ being a normalisation factor determined experimentally.

12. Device for detecting (2) failure of an analogue sensor (3), for implementing the detecting method in accordance with any one of claims 1 to 11,
    **characterised in that** it comprises:

    - an indicating means for indicating the operating state of an analogue sensor comprising a sensor input connector (3a), said indicating means comprising an input connector (5) connected via conductors to an output connector (6),

- and a control circuit (7) for controlling the operation of the sensor (3) connected to said conductors so as to connect in series said device (2) between the sensor input connector (3a) and a beam output connector (4a) of the sensor respectively by virtue of the output connector (6) and the input connector (5) of the indicating means, said beam (4) connecting by virtue of the device (2) said sensor (3) to a means for processing signals issued by the sensor (3), said control circuit (7) comprising means for evaluating the operating state of the sensor via statistical calculations and also at least one shift register recording the values measured by the sensor (3) and used to perform said statistical calculations, by virtue of a recording means (9).

13. Detecting device (2) according to claim 12,
**characterised in that** it is connected to the sensor input connector (3a) and to the beam output connector (4a) via shielded and sealed conductors (8).

14. Detecting device (2) according to claim 12 or 13,
**characterised in that** it is integrated in a removable module.

15. Detecting device (2) according to any one of claims 12 to 14,
**characterised in that** it is on-board an aircraft of the helicopter type.

16. Detecting device (2) according to any one of claims 12 to 15,
**characterised in that** it is adapted to be certified and/or qualified as aeronautical equipment.

17. Aircraft comprising a plurality of analogue sensors (3),
**characterised in that** it comprises a display device (10) for displaying the state of the various sensors (3), said state of each of the sensors (3) being established via detecting devices (2) in accordance with any one of claims 12 to 16 and said display device (10) being connected to the detecting devices (2) by electrical connections (11) or other equivalent means.

## Fig.1

DONNEES
MESUREES 90

ANALYSE 100

CAPTEUR
OK

N → SIGNAL B 130

O

SIGNAL A 155

STOCKAGE SIGNAL B 160

## Fig.4

3 | 3a

8

2

6 | 5

7 | 9

8

11

10

4 | 4a

Fig.2

Fig.3

```
        ┌──────────────────┐
  90 ───┤     DONNEES      │
        │     MESUREES     │
        └────────┬─────────┘
                 │
        ┌────────▼─────────┐
 105 ───┤  DISCONTINUITES  │
        │     MESURES      │
        └────────┬─────────┘
                 │
              ◇ OUI/NON ◇──── O ───────────────┐
                 │                              │
                 N                              │
        ┌────────▼─────────┐                    │
 110 ───┤     SEUILS       │                    │
        │  FONCTIONNEMENT  │                    │
        └────────┬─────────┘                    │
                 │                              │
            ◇ SEUILS ◇──── O ──────────────────┤
              DEPASSES                          │
                 │                              │
                 N                              │
        ┌────────▼─────────┐                    │
 120 ───┤     SEUILS       │                    │
        │     PENTES       │                    │
        └────────┬─────────┘                    │
                 │                              │
            ◇ SEUILS ◇──── O ──────────────────┤
              DEPASSES                          │
                 │                              │
 125             N                              ▼
        ┌────────▼─────────┐         ┌──────────────────┐  130
        │     ANALYSE      │         │     SIGNAL B     │
        │   STATISTIQUE    │    ┌───►│                  │
        └────────┬─────────┘    │    └──────────────────┘
                 │              │
            ◇ SEUILS ◇──── O ───┘
              DEPASSES
                 │
                 N          ┌──────────────────┐
                 └─────────►│     SIGNAL A     │── 155
                            │                  │
                            └──────────────────┘
```

## RÉFÉRENCES CITÉES DANS LA DESCRIPTION

**Documents brevets cités dans la description**

- WO 9703385 A
- FR 2884605
- WO 02088850 A
- US 4761748 A
- US 2004152187 A